Europäisches Patentamt

European Patent Office

Office européen des brevets

(11) Numéro de publication: **0 272 959 B1**

(12) **FASCICULE DE BREVET EUROPEEN**

(19)

(11) Numéro de publication: **0 272 959 B1**

(45) Date de publication de fascicule du brevet:
**29.01.92**

(21) Numéro de dépôt: **87402619.8**

(22) Date de dépôt: **19.11.87**

(51) Int. Cl.⁵: **G09B 9/04**

(54) **Procédé de lecture d'une scène mobile enregistrée, notamment sur vidéodisque, et application à des simulateurs de conduite.**

(30) Priorité: **24.11.86 FR 8616329**

(43) Date de publication de la demande:
**29.06.88 Bulletin 88/26**

(45) Mention de la délivrance du brevet:
**29.01.92 Bulletin 92/05**

(84) Etats contractants désignés:
**AT BE CH DE ES GB GR IT LI LU NL SE**

(56) Documents cités:
**EP-A- 0 145 598**
**EP-A- 0 200 601**
**FR-A- 2 512 234**
**FR-A- 2 571 883**
**GB-A- 2 120 495**

**S.M.P.T.E. JOURNAL, vol. 92, no. 5, mai 1983, pages 571-576, Scarsdale, new York, us: W. BOCK: "Videodisk standards: A software view of the technology"**

(73) Titulaire: **GIRAVIONS DORAND, Société dite:**
**5 rue Jean Macé**
**F-92150 Suresnes(FR)**

(72) Inventeur: **Deslypper, Christian**
**6 Square Saint Vincent**
**Jouy le Moutier F-95000 Cergy(FR)**

(74) Mandataire: **Thibon-Littaye, Annick**
**Cabinet A. THIBON-LITTAYE 11 rue de l'Etang**
**F-78160 Marly-le-Roi(FR)**

Rank Xerox (UK) Business Services

## Description

La présente invention concerne la lecture d'images préalablement enregistrées dans les applications où les images sont restituées par trames de lecture successives correspondant chacune à une image, ce qui est plus particulièrement le cas des images vidéo.

Dans une application préférée, mais non limitative, l'invention vise notamment à mettre à profit les facilités de sélection d'images des enregistrements sur vidéodisques pour faire varier la vitesse apparente de défilement des images lors de la lecture. Ainsi, dans la lecture d'une scène mobile préalablement enregistrée sur vidéodisque, il devient possible de faire varier l'impression de vitesse d'un observateur des images représentées. On peut alors, par exemple, commander un simulateur de conduite par restitution d'un paysage en déplacement devant un pilote en commandant la vitesse de défilement du paysage en fonction de la vitesse de conduite simulée par le pilote.

Les lecteurs de vidéodisques actuels sont conçus pour permettre de sélectionner l'image à restituer à chaque trame de lecture par un processus périodique qui peut sauter ou répéter des images, par exemple une image sur deux. Il n'est nullement envisagé que la vitesse de représentation puisse varier continûment, de manière progressive, comme il en est besoin notamment pour les simulateurs de conduite. En effet, alors même que le lecteur serait commandé pour sauter par exemple une image sur deux, ceci ne conduirait pas plus qu'à une augmentation de vitesse par paliers, sans permettre la variation progressive et sans saccades que vise l'invention, puisqu'il est impératif de conserver toujours le même temps de lecture d'une image par une trame de balayage vidéo.

On connaît du document FR-A-2 571 883 un procédé de positionnement de séquences d'images sur un support d'information en forme de disque. Selon ce procédé, on utilise un vidéodisque comprenant une piste en spirale sur laquelle les signaux d'images sont mémorisés à raison d'une trame par 180 degrés, chaque image étant formée de deux trames et les séquences d'images étant entrelacées par segment de longueur constante. Si ce procédé permet d'obtenir un défilement accéléré par déplacement radial de la tête de lecture vers l'intérieur du disque, ce défilement accéléré est obligatoirement un multiple du triple de la vitesse normale.

Pour atteindre son objectif l'invention propose un procédé de lecture d'une scène mobile préalablement enregistrée sous forme d'images successives suivant lequel lesdites images sont restituées par trames de lectures successives correspondant chacune à une image, lesdites trames se succédant à une cadence prédéterminée correspondant à une vitesse nominale de défilement de la scène mobile, caractérisé en ce que :

- l'on définit une vitesse apparente a laquelle on souhaite voir défiler ladite scène mobile,
- on détermine automatiquement une fonction exprimant le rapport de ladite vitesse apparente V à ladite vitesse nominale Vnom par un nombre d'images enregistrées à sauter ou à répéter périodiquement lors de la lecture, cette fonction comportant un premier terme exprimant un nombre entier M de sauts d'image à chaque trame de lecture et un second terme exprimant une partie fractionnaire dudit rapport des vitesses, venant en plus ou en moins du premier terme, par un nombre entier N d'images supplémentaires, à sauter ou à répéter respectivement dans chaque lot successif de trames de lecture comprenant un nombre de trames K prédéterminé,
- et l'on commande automatiquement le passage d'une image à une autre à chaque trame de lecture par un programme prenant en compte ladite fonction et faisant intervenir une table de sauts préalablement mise en mémoire qui répartit les N images supplémentaires dans chaque lot de K trames d'un manière répétitive d'un lot à l'autre.

Dans un mode de mise en oeuvre préféré du procédé, ladite fonction comporte un premier terme exprimant un nombre entier de sauts d'image à chaque trame de lecture et un second terme exprimant une partie fractionnaire dudit rapport des vitesses, venant en plus ou en moins du premier terme, par un nombre entier N d'images supplémentaires, à sauter ou à répéter respectivement dans chaque lot successif de trames de lecture comprenant un nombre de trames K prédéterminé.

Suivant une autre caractéristique avantageuse de l'invention, le programme de commande automatique de la lecture fait intervenir une table de sauts préalablement mise en mémoire qui répartit de manière équilibrée les N images supplémentaires dans chaque lot de K trames.

Dans la pratique, le nombre K prédéterminé sera généralement choisi parmi les chiffres 4, 8, 16 ou 32, qui sont bien adaptés à un traitement informatique en système binaire.

Par ailleurs, il est préférable que la fonction prévue dans le procédé comporte en premier terme un nombre entier M. Toutefois, la table de sauts préenregistrée est déjà fort utile même si la fonction est limitée à son second terme, tout particulièrement dans la réalisation des ralentis lorsque M est nul.

L'invention concerne également un dispositif de commande d'un lecteur de vidéodisques qui comporte des moyens appropriés à la mise en oeuvre du procédé selon l'invention.

La présente invention peut notamment se traduire par la mise en oeuvre d'un programme d'ordinateur suivant un algorithme $V = Vnom \times (M + N/K)$, ou Vnom est la vitesse nominale et V la vitesse apparente à la lecture. On notera que dans l'application à la restitution du déplacement d'un mobile piloté par variation de la vitesse apparente de défilement d'un paysage enregistré constituant la scène mobile, la vitesse nominale considérée peut être ou non constante suivant que le mobile à partir duquel le paysage a été enregistré se déplaçait à vitesse constante ou non. De manière avantageuse, la cadence des prises de vues à l'enregistrement sera constante, de même que la cadence des trames de lecture à la restitution.

Un autre but de l'invention est une application du procédé à la simulation de conduite d'un mobile, non seulement en fonction de la vitesse mais également en fonction d'un angle de vue du conducteur et/ou de la direction du déplacement simulé du mobile dans les trois dimensions.

Ce but est atteint par le fait que l'enregistrement des images est effectué dans au moins deux fichiers, chacun correspondant à un angle de vue différent en site ou à un grossissement de visée différent et à une série d'images d'un même panorama enregistré sous un angle de vue différent associé à une référence codée de fichiers et par le fait que la sélection des images à reconstituer devant l'observateur s'effectue également par les références codées de fichiers et d'azimut de leur enregistrement en fonction, respectivement, du grossissement ou de l'orientation en site et de l'orientation en azimut déterminées par des moyens de commande de visée permettant à un observateur de déterminer à volonté un angle de vue.

Un dernier but de l'invention est une application à la simulation de la conduite d'un mobile, non seulement en fonction de la vitesse et/ou de l'angle du vue, mais également en fonction des erreurs de direction commandées par le conducteur élève.

Ce but est atteint par le fait que l'on commande sur les images sélectionnées un déplacement par rapport à une fenêtre de visualisation en fonction des erreurs de pilotage en direction du conducteur élève, par comparaison entre les commandes de l'organe de pilotage en direction commandées par le conducteur élève et les commandes modèle de direction du conducteur modèle préalablement enregistrées soit directement sur le vidéodisque par un codage approprié utilisant une partie de la plage de temps réservée aux divers signaux de service et de synchronisation soit de manière externe au vidéodisque par l'intermédiaire d'une table en mémoire des moyens informatiques assurant le traitement de l'algorithme.

D'autres caractéristiques et avantages de la présente invention apparaîtront plus clairement à la lecture de la description ci-après, faite en référence aux dessins représentatifs d'un mode de réalisation préférentiel, mais non limitatif, dans lesquels :

- la figure 1 représente un schéma des moyens permettant l'application du procédé à la simulation de conduite ;
- la figure 2 représente l'organigramme de l'algorithme mis en oeuvre par le procédé selon l'invention ;
- la figure 3 représente le principe du procédé selon l'art antérieur ;
- la figure 4 représente la table de saut d'images mise en oeuvre dans l'algorithme du procédé de l'invention ;
- la figure 5 représente l'application du procédé selon l'invention à une simulation de conduite de mobile en fonction de l'angle de visée et/ou de la direction du déplacement simulé ;
- la figure 6 représente l'application du procédé de l'invention à une simulation de conduite de véhicule en fonction de l'erreur de conduite.

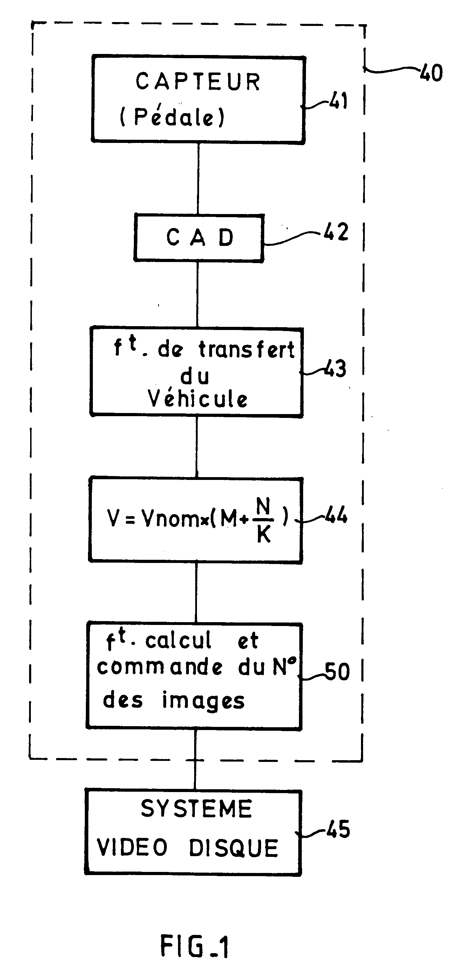

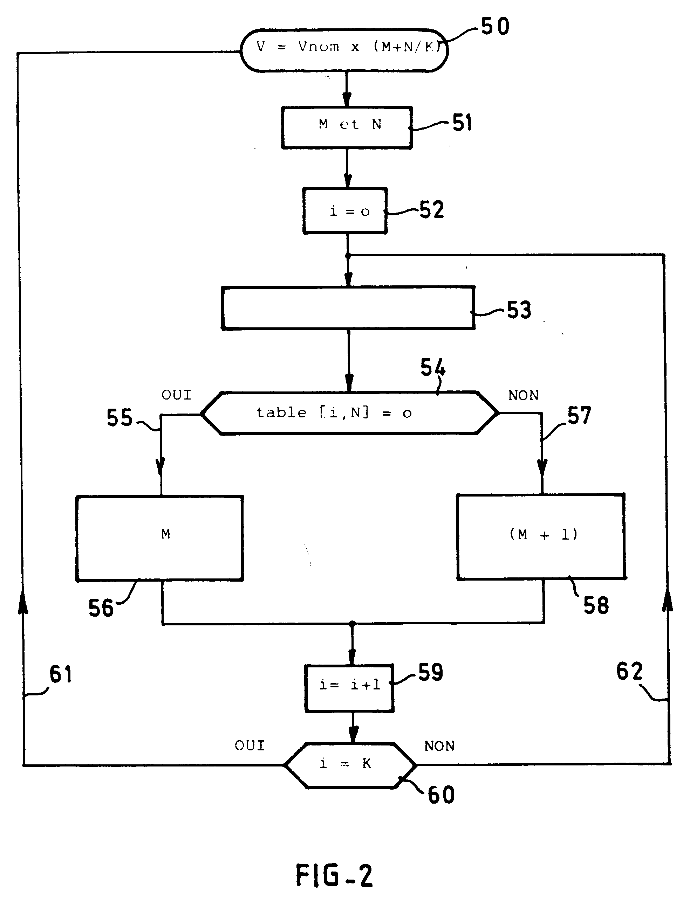

L'organigramme d'un simulateur de conduite d'un mobile en fonction de la vitesse est représenté à la figure 1. Il comprend un capteur 41, lié par exemple à une pédale, simulant l'accélérateur d'un véhicule, lequel capteur délivre un signal analogique caractéristique du déplacement de la pédale à un convertisseur analogique numérique C A D 42. La sortie de ce convertisseur analogique numérique C A D 42 est envoyé sur un circuit 43 de simulation de la fonction de transfert du véhicule qui permet, d'élaborer un signal numérique V représentatif de la vitesse assignée à chaque instant au véhicule. Ce signal V est traduit sous la forme d'un nombre entier M et d'un nombre fractionnaire N/K représenté dans le pavé 44 exprimant le rapport de la vitesse V à la vitesse normale de lecture du vidéodisque, donc, pour les images, à une vitesse nominale Vnom. Cette opération, permettant d'élaborer ledit signal V, est réalisée par la fonction calcul et commande du numéro des images représentée par le pavé 50, cette fonction étant réalisée par l'algorithme du programme représenté en figure 2. Le résultat du calcul du numéro des images est appliqué comme commande à un système lecteur de vidéodisque à laser 45.

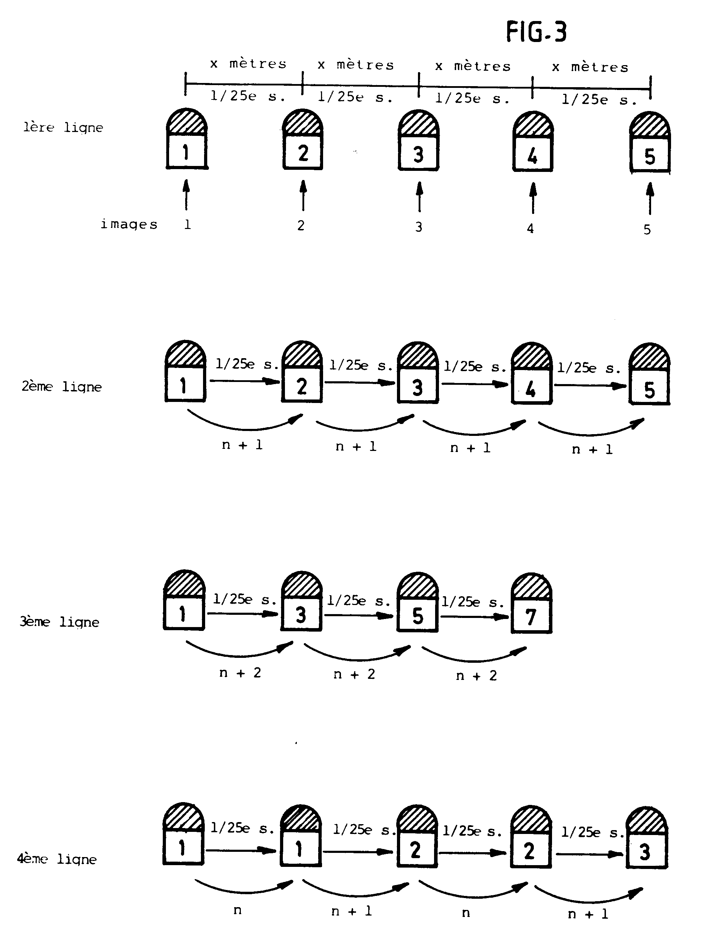

La figure 3 représente le principe des procédés de prise de vues et de restitution des images mis en oeuvre de façon classique sur les vidéodisques. La première ligne de la figure 3 représente la prise de vue qui s'effectue à partir d'un mobile se déplaçant à vitesse déterminée, et à l'aide d'une caméra enregistrant une image tous les 1/25e de seconde. Par conséquent chaque image et l'image suivante associée représente un incrément de distance de x mètres. Pour une vitesse de déplacement constante, tout les incréments de distance sont égaux. Lors de la restitution des images, si tous les 1/25e de seconde on passe de l'image n à l'image n + 1, l'observateur verra un déplacement à la même vitesse que celle d'enregistrement, c'est-à-dire à la vitesse nominale. Ceci est représenté à la deuxième ligne de la figure 3.

Lorsque l'on veut passer à une vitesse double pour la restitution, on saute une image sur deux pour passer à chaque trame de lecture vidéo, de l'image n à l'image n + 2. Ceci est représenté à la ligne 3 de la figure 3. A la lecture du vidéodisque, dans les procédés classiques d'utilisation, une variation de la vitesse apparente de déplacement n'est possible que dans le sens du ralenti, on obtient alors une vitesse apparente de déplacement sous multiple entier de la vitesse nominale. Par exemple, lorsque l'on veut réduire la vitesse de moitié pour la restitution, on effectue un saut d'image une fois sur deux dans un temps déterminé. Ainsi, comme représenté à la dernière ligne de la figure 3, on commence par ne pas sauter d'images en redoublant la lecture de l'image n, puis on saute à l'image n + 1, puis on ne fait pas de sauts en redoublant la lecture de cette image, et enfin on passe à l'image suivante.

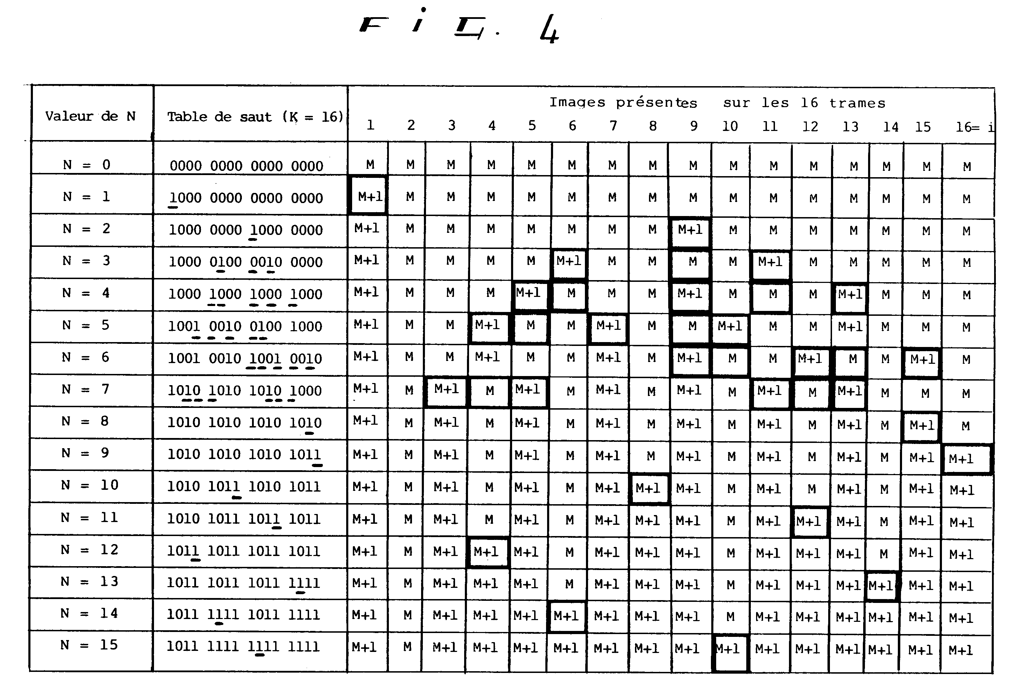

Ce mode de commande de la restitution des images enregistrées n'est applicable que pour autant que pour chaque trame de lecture vidéo effective, on ait soit à sauter par dessus un nombre entier d'images enregistrée, soit à relire un nombre entier de fois la même image. On ne dispose donc que d'un nombre restreint de vitesses possibles et toute variation de vitesse ne peut s'effectuer que par paliers. De plus les paliers de ralenti sont rarement compatibles avec le rythme nécessaire à une vision saine d'une scène mobile en continu. En pratique, l'observateur aura une sensation de saccades. Ce phénomène est évité par la mise en oeuvre de l'algorithme représenté à la figure 2 et à la figure 4.

Le programme de commande des numéros des images 50 à restituer commence alors par une étape de lecture des nombres M et N, représentée à l'étape 51, puis par une étape de retour à la première trame i = 1, représentée à l'étape 52, i représentant les différents numéros des K trames. On passe ensuite à l'étape 53 qui est l'attente de retour de la trame du vidéodisque et une fois ce signal obtenu on passe à l'étape 54 de lecture de la table de saut de la figure 4 en fonction de la valeur de i, indiquant le numéro de la trame que l'on est en train de traiter, et de la valeur de N indiquant le nombre d'images supplémentaires qui seront visualisées au cours des K trames.

Dans l'exemple de table de saut représenté à la figure 4, la valeur K a été choisi égale à 16. Dans l'étape 54 on regarde si la valeur indiquée dans la table de saut est égale à 0 ou est égale à 1. Lorsque cette valeur est égale à 0 on passe par la branche 55 à l'étape 56 qui commande l'avancement à l'image M. Autrement dit, on reste sur la même image pour la trame de lecture suivante. Lorsque la valeur de la table et égale à 1, on passe par le branchement 57 à l'étape 58 commandant l'avancement à l'image M + 1. Une fois l'un de ces deux avancements 56 ou 58 effectués, on incrémente la valeur i à l'étape 59 et on effectue à l'étape 60 un test sur cette valeur i pour déterminer si i est égal à K. Dans le cas où i est égal à K, c'est-à-dire 16 dans le cas de la table de la figure 4, on a effectué la restitution des images enregistrées à une vitesse accélérée ou ralentie correspondant aux données M et N délivrées à la sortie du pavé 43. On retourne alors à l'étape 50 par le branchement 61 pour recevoir les nouvelles consignes. Dans le cas où i n'est pas égal à K on retourne par le branchement 62 à l'étape 53 d'attente de retour de trame pour traiter le numéro de trame i suivant.

Ainsi, comme on peut le comprendre sur la figure 4, lorsque l'on veut restituer les images à une vitesse diminuée d'un quart de la vitesse nominale, ceci revient à déterminer que M est égal à 0 et N est égal à 4 et sur la ligne N = 4 dans la table de saut, on voit que la première trame affiche l'image M + 1, les trois suivantes l'image M, la trame 5 l'image M + 1, les trois suivantes l'image M, la trame 9 l'image M + 1, les trois suivantes l'image M, la trame 13 l'image M + 1 et les trois suivantes l'image M. Lorsque l'on considère la ligne N = 0 de la figure 4 on se trouve dans la situation où l'on projette une image fixe si M est égal à 0. De même si on veut restituer les images à une vitesse accélérée correspondant à deux fois et 7/16e la vitesse nominale, on aura une valeur de M égale à 2 et une valeur de N égale à 7. On constate alors que jusqu'à la trame 14 on sautera alternativement trois et deux images lors de la lecture du vidéodisque et pour les trames 15 et 16, deux images seulement.

Sur la figure 4 on a souligné les numéros de la table de saut et encadré les cases pour lesquelles le numéro d'image se modifie lorsque l'on passe de la ligne supérieure à la ligne inférieure suivante, c'est-à-dire de la valeur N = 1 par exemple à la valeur N = 2.

La table de saut représentée à la figure 4 est enregistrée dans une mémoire du dispositif de commande du lecteur de vidéodisque, cette mémoire étant adressée en fonction des nombres M et N (indiquant le nombre de sauts à effectuer) et du numéro i de la trame traitée, ce qui, comme indiqué sur l'organigramme de la figure 2, permet de déterminer en fonction de la valeur du bit enregistré dans la table à cette adresse, l'avancement de M image(s) ou l'avancement de M + 1 image(s).

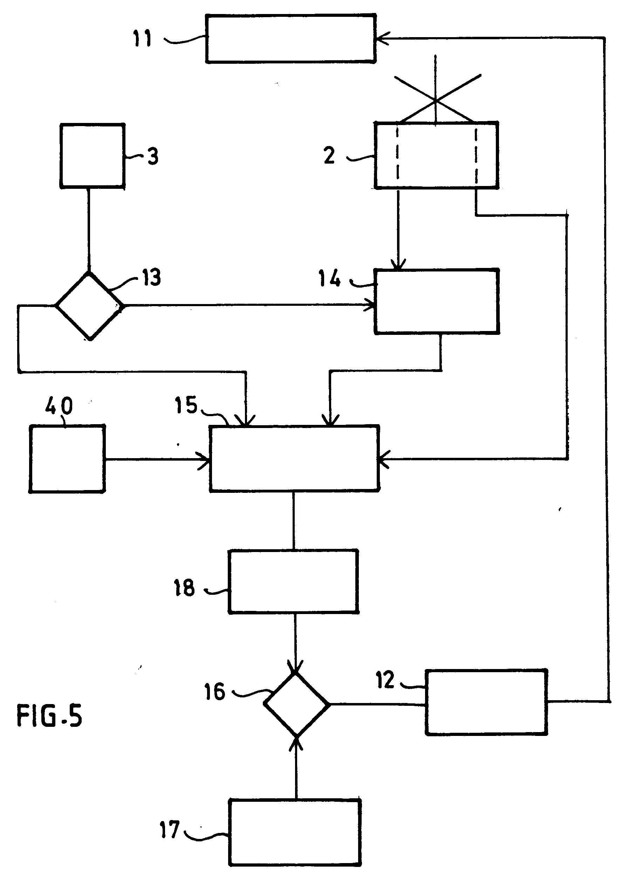

La figure 5 représente une application du procédé et dispositif selon les figures 1, 2 et 4 à un dispositif de simulation de conduite à vitesse et angle de visée variables. Un tel dispositif de simulation de conduite à angle de visée variable est décrit en détail dans la demande de brevet français n° 85 05226 déposée le 5 avril 1985 au nom de GIRAVIONS-DORAND. Ce dispositif de simulation de conduite à angle de visée variable est combiné avec le dispositif de simulation de conduite à vitesse variable constitué par les éléments représentés dans le pavé 40 qui vient se connecter au niveau du dispositif 15 de détermination du numéro d'image. Ce dispositif 15 de détermination du numéro d'image de la figure 5 délivrera en sortie un numéro d'image qui sera fonction à la fois du gisement et de l'angle de visée, mais également fonction de la vitesse simulée par le conducteur. Cette vitesse simulée est fonction du numéro de l'image à visualiser défini dans les K trames par M ou par M + 1 selon les valeurs de M, de N et de i. En conséquence, le numéro d'image visualisé sera fonction à la fois de la position du manche de pilotage 2, de la position du commutateur de grossissement 3 et de la position du capteur 41. Ce numéro d'image est utilisé dans un circuit 18 de consigne pour être envoyé sur un comparateur 16 qui permet à l'aide d'un dispositif de lecture 17 d'élaborer un signal vidéo 12, lequel est envoyé sur une lunette de projection 11. Comme indiqué dans la demande de brevet français n° 85 05226 de GIRAVIONS-DORAND l'enregistrement des images est effectué dans au moins deux fichiers, chacun correspondant à un angle de vue différent en site ou à un grossissement de visée différent et à une série d'images d'un même panorama enregistré sous un angle de vue différent associé à une référence codée de fichier. La sélection des images à reconstituer devant l'observateur s'effectue par les références codées de fichier et d'azimut des images enregistrées et les références qui sont fournies par le grossissement ou l'orientation en site ou en azimut déterminé par les moyens de commande de visée 2,3.

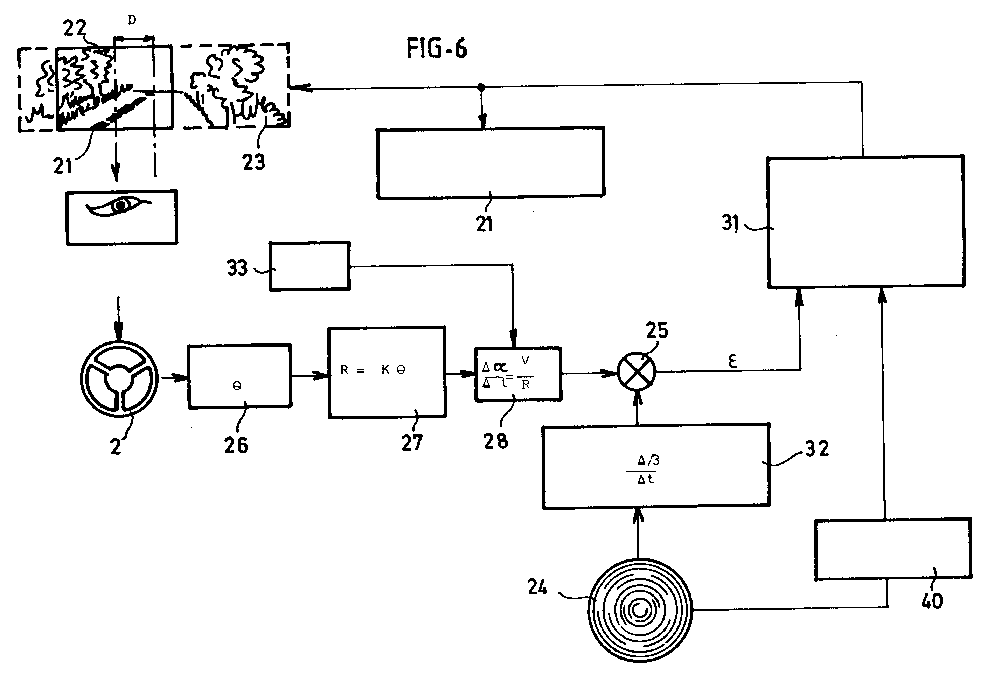

La figure 6 représente une application du dispositif et procédé de simulation de la conduite d'un véhicule en fonction de la vitesse à un dispositif de simulation de la conduite d'un véhicule en fonction de l'erreur de direction commandée par le conducteur élève, un tel dispositif étant divulgué dans la demande de brevet français n° 83 20136 déposée le 15 décembre 1983 au nom de GIRAVIONS-DORAND. Comme indiqué dans cette demande le dispositif élabore un signal d'erreur $\epsilon$ à partir d'un signal $\theta$ indiquant la direction commandée par le conducteur élève et d'un signal $\Delta\beta$ sur $\Delta t$ préalablement enregistré sur le vidéodisque lui-même par un codage adéquat, ou dans une mémoire extérieure au vidéodisque et indiquant les commandes modèle de direction du conducteur modèle. Ce signal $\epsilon$ servant dans un circuit 31 à élaborer un décalage D de l'image visualisée devant le conducteur élève placé devant son volant 2. Le dispositif de détection 26 élabore un signal $\theta$ qui est transformé par un circuit 27 en un signal R = K$\theta$ lequel signal est transformé dans un circuit 28 en un signal $\Delta\ \alpha/\Delta t$ = V/R. Cette valeur $\Delta\ \alpha/\Delta t$ servant dans un comparateur 25 à élaborer avec le signal $\Delta\ \beta/\Delta t$ le signal $\epsilon$.

Ce dispositif est combiné avec le dispositif de simulation de la conduite en fonction de la vitesse en ajoutant la fonction de sélection du numéro de l'image représentée par le pavé 40 à la sortie du vidéodisque de façon à constituer ainsi le signal vidéo. De ce fait les images sélectionnées par le circuit 40 seront décalées dans le circuit 31 en fonction des erreurs $\epsilon$ de pilotage en direction du conducteur élève par comparaison avec les commandes modèle de direction enregistrées sur le vidéodisque même ou dans une mémoire extérieure.

## Revendications

1.   Procédé de lecture d'une scène mobile préalablement enregistrée sous forme d'images successives suivant lequel lesdites images sont restituées par trames de lectures successives correspondant chacune à une image, lesdites trames se succédant à une cadence prédéterminée correspondant à une vitesse nominale de défilement de la scène mobile, caractérisé en ce que :

    - l'on définit une vitesse apparente à laquelle on souhaite voir défiler ladite scène mobile (50),

    - on détermine automatiquement une fonction exprimant le rapport de ladite vitesse apparente V à ladite vitesse nominale Vnom (50) par un nombre d'images enregistrées à sauter ou à répéter périodiquement lors de la lecture, cette fonction comportant un premier terme exprimant un nombre entier M de sauts d'image à chaque trame de lecture et un second terme exprimant une partie fractionnaire dudit rapport des vitesses, venant en plus ou en moins du premier terme, par un nombre entier M d'images supplémentaires (51), à sauter ou à répéter respectivement dans chaque lot successif de trames de lecture comprenant un nombre de trames K prédéterminé (59, 61),

- et l'on commande automatiquement le passage d'une image à une autre à chaque trame de lecture par un programme prenant en compte ladite fonction et faisant intervenir une table de sauts préalablement mise en mémoire qui répartit les N images supplémentaires dans chaque lot de K trames d'un manière répétitive d'un lot à l'autre.

2. Procédé selon la revendication 1, caractérisé en ce que le nombre K prédéterminé sera généralement choisi parmi les chiffres 4, 8, 16 ou 32 qui sont bien adaptés à un traitement informatique en système binaire.

3. Procédé selon l'une quelconque des revendications précédentes, caractérisé en ce que les images sont enregistrées et exploitées par un système à vidéodisque (24).

4. Application du procédé selon la revendication 3 à la simulation de conduite d'un mobile en fonction de la vitesse, caractérisée en ce qu'un signal de consigne de vitesse du mobile délivré par un capteur (41) est envoyé sur un circuit (43) de simulation de la fonction de transfert du mobile pour délivrer un signal de vitesse conforme à la relation V = Vnom x (M + N/K), ce signal servant de consigne pour la sélection des images enregistrées à restituer.

5. Application du procédé selon la revendication 4, caractérisée en ce que l'enregistrement des images est effectué dans au moins deux fichiers, chacun correspondant à un angle de vue différent en site ou à un grossissement de visée différent et à une série d'image d'un même panorama enregistré sous un angle de vue différent associé à une référence codée de fichier et la sélection des images à reconstituer devant l'observateur s'effectuant également par les références codées de fichier et d'azimut de leurs enregistrements en fonction respectivement du grossissement ou de l'orientation en site et de l'orientation en azimut déterminé par des moyens de commande de visée permettant à l'observateur de déterminer à volonté un angle de vue.

6. Application du procédé selon la revendication 5, caractérisé en ce que sur les images sélectionnées on commande un déplacement par rapport à une fenêtre de visualisation (22) en fonction des erreurs de pilotage en direction du conducteur élève, par comparaison entre les commandes de l'organe de pilotage en direction commandées par le conducteur élève et les commandes modèle de direction du conducteur modèle préalablement enregistrées sur le vidéodisque (24) lui-même par un codage adéquat, ou dans une mémoire extérieure au vidéodisque.

## Claims

1. A method for reading a moving scene which has been previously recorded in the form of successive images in which the said images are provided by successive reading frames each corresponding to one image, the said frames succeeding each other at a predetermined rate corresponding to a nominal speed of movement of the moving scene, characterised in that:

   - an apparent speed (50) at which it is desired that the said moving scene should be seen to move is defined,
   - a function expressing the ratio of the said apparent speed V to the said nominal speed Vnom (50) is determined automatically by a number of recorded images which have to be skipped or repeated periodically while reading is in progress, this function comprising a first term expressing a whole number M of images skipped at each reading frame and a second term expressing a fractional part of the said ration of speeds, added to or subtracted from the first term, by a whole number N of supplementary images (51) which have to be skipped or repeated respectively in each successive lot of reading frames comprising a predetermined number of frames K (59, 1),
   - and in that passage from one image to another for each reading frame is controlled automatically by a program which takes the said function into account and brings into play a table of predetermined skips which has been placed in the memory which distributes the additional N images in each lot of K frames in a manner which is repetitive from one lot to another.

2. A method according to claim 1, characterised in that the predetermined number K will generally be selected from the numerals 4, 8, 16 or 32 which are suitable for processing by a binary system.

3. A method according to any one of the foregoing claims, characterised in that the images are recorded and utilised by a video disc system (24).

4. Application of the method according to claim 3 to the simulation of the driving of a vehicle as a function of speed, characterised in that a reference signal for the speed of the vehicle provided by a sensor (41) is passed to a circuit (43) simulating the transfer function of the vehicle to produce a speed signal according to the relationship V = Vnom x (M + N/K), this signal being used as a reference for selection of the recorded images which are to be reconstituted.

5. Application of the method according to claim 4, characterised in that the images are recorded in at least two files, each corresponding to a different angle of view or a different enlargement and to a series of images of a given panorama recorded from a different angle of view associated with a coded file reference and the images which are to be reconstituted before the observer being also selected by the coded file references and the azimuth of their records as a function of the enlargement or spatial orientation respectively and the azimuth orientation determined by the view controls whereby the observer can determine the angle of view at will.

6. Application of the method according to claim 5, characterised in that with respect to the selected images movement in relation to a viewing window (22) is controlled in relation to the steering errors of the learner driver, by comparing the steering commands given by the learner driver and model steering commands previously recorded on the video disc (24), again by means of appropriate codes, or in a memory not on the video disc.

## Patentansprüche

1. Verfahren zum Lesen einer beweglichen Szene, die zuvor in Form von aufeinanderfolgenden Bildern aufgezeichnet wurde und nach dem die genannten Bilder durch aufeinanderfolgende Leseraster rekonstruiert werden, wobei jedes Raster einem Bild entspricht und die genannten Raster in einer vorherbestimmten Takt aufeinanderfolgen, der einer nominalen Abspielgeschwindigkeit der beweglichen Szene entspricht, dadurch gekennzeichnet, daß:
   - eine gewünschte Scheingeschwindigkeit definiert wird, mit der die genannte bewegliche Szene abgespielt werden soll (50).
   - automatisch eine Funktion bestimmt wird, die die Beziehung der genannten Scheingeschwindigkeit V zu der genannten nominalen Geschwindigkeit Vnom (50) durch eine Anzahl von aufgezeichneten Bildern, die zu überspringen oder periodisch bei der Ablesung zu wiederholen sind, angibt, wobei diese Funktion ein erstes Glied enthält, das eine ganze Zahl M von Bildsprüngen bei jedem Leseraster angibt und ein zweites Glied, das einen Bruchteil des genannten Geschwindigkeitsverhältnisses angibt und zu dem ersten Glied zugezählt oder von ihm abgezogen wird, durch eine ganze Zahl N von zusätzlichen Bildern (51), die jeweils in jedem aufeinanderfolgenden Leserasterstapel zu überspringen oder zu wiederholen sind und die eine vorherbestimmte Anzahl Raster K (59(1) enthält,
   - und der Übergang von einem Bild zum anderen automatisch in jedem Leseraster durch ein Programm gesteuert werden kann, das die genannte Funktion berücksichtigt und bei dem eine vorher eingespeicherte Sprungtabelle benutzt wird, die die N zusätzlichen Bilder in jeden Stapel von K Raster verteilt und zwar von einem Stapel zur nächsten wiederholend.

2. Verfahren nach Anspruch 1, dadurch gekennzeichnet, daß die vorherbestimmte Zahl K im allgemeinen aus den Zahlen 4, 8, 16 oder 32 gewählt wird, die für eine Datenverarbeitung im Binärsystem gut geeignet sind.

3. Verfahren nach irgendeinem der vorstehenden Ansprüche, dadurch gekennzeichnet, daß die Bilder von einem Bildplattensystem (24) aufgezeichnet und verarbeitet werden.

4. Anwendung des Verfahrens nach Anspruch 3 auf die Simulation des Fahrers eines Fahrzeugs in Abhängigkeit von der Geschwindigkeit, dadurch gekennzeichnet, daß ein Geschwindigkeitssollsignal des Fahrzeugs, das von einem Fühler geliefert wird (41), auf eine Bahn (43) zur Simulation der Fortbewegungsfunktion des Fahrzeugs geschickt wird, um ein Geschwindigkeitssignal entsprechend der Gleichung V = Vnom x (M + N/K) zu liefern, wobei dieses Signal als Sollwert für die Auswahl der zu rekonstruierenden, aufgezeichneten Bilder dient.

5. Anwendung des Verfahrens nach Anspruch 4, dadurch gekennzeichnet, daß die Aufzeichnung der Bilder in mindestens zwei Dateien erfolgt, wobei jede Datei einem örtlich verschiedenen Blickwinkel oder einer unterschiedlichen Peilvergrößerung entspricht und einer Bildserie desselben Panoramas, aufgezeichnet unter einem anderen Blickwinkel, in Verbindung mit einer kodierten Dateireferenz und die Auswahl der vor dem Beobachter zu rekonstruierenden Bilder erfolgt ebenfalls über kodierte Datei- und Azimutreferenzen ihrer Aufzeichnungen, jeweils in Abhängigkeit von der Vergrößerung oder der örtlichen Orientierung und der Azimutorientierung, bestimmt durch Mittel zur Peilungssteueung, die es dem Beobachter ermöglichen, seinen Blickwinkel nach Wunsch zu bestimmen.

6. Anwendung des Verfahrens nach Anspruch 5, dadurch gekennzeichnet, daß bei den ausgewählten Bildern eine Verschiebung in Bezug zu einem Visualisierungsfenster durchgeführt wird, in Abhängigkeit von Richtungsfahrfehlern des Fahrschülers, durch Vergleich zwischen den Befehlen des Richtungssteuerorgans, die vom Fahrschüler gegeben werden und den Richtungsmodellbefehlen des Modellfahrers, die zuvor entweder durch geeignete Kodierung auf der Bildplatte (24) selbst oder in einem zur Bildplatte externen Speicher aufgezeichnet wurden.

```
┌─────────────────────────────────────────┐
│                                          │
│      ┌──────────────────┐                │
│      │    CAPTEUR       │  ╭─40          │
│      │   (Pédale)       │─41            │
│      └──────────────────┘                │
│               │                          │
│        ┌──────────────┐                  │
│        │   C A D      │─42              │
│        └──────────────┘                  │
│               │                          │
│      ┌──────────────────┐                │
│      │ fᵗ. de transfert │                │
│      │       du         │─43            │
│      │    Véhicule      │                │
│      └──────────────────┘                │
│               │                          │
│      ┌──────────────────┐                │
│      │                  │                │
│      │  V = Vnom×(M+ N ) │─44           │
│      │              K   │                │
│      └──────────────────┘                │
│               │                          │
│      ┌──────────────────┐                │
│      │ fᵗ. calcul   et  │                │
│      │ commande du N°   │─50            │
│      │   des images     │                │
│      └──────────────────┘                │
│               │                          │
└───────────────┼──────────────────────────┘
        ┌──────────────────┐
        │    SYSTEME       │─45
        │  VIDEO DISQUE    │
        └──────────────────┘
```

$$V = V_{nom} \times \left(M + \frac{N}{K}\right)$$

FIG.1

9

FIG-2

## FIG.3

x mètres | x mètres | x mètres | x mètres
1/25e s. | 1/25e s. | 1/25e s. | 1/25e s.

1ère ligne

images    1        2        3        4        5

2ème ligne

1/25e s.   1/25e s.   1/25e s.   1/25e s.

$n+1$   $n+1$   $n+1$   $n+1$

3ème ligne

1/25e s.   1/25e s.   1/25e s.

$n+2$   $n+2$   $n+2$

4ème ligne

1/25e s.   1/25e s.   1/25e s.   1/25e s.

$n$   $n+1$   $n$   $n+1$

EP 0 272 959 B1

# Fig. 4

| Valeur de N | Table de saut (K = 16) | Images présentes sur les 16 trames | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16= i |
| N = 0 | 0000 0000 0000 0000 | M | M | M | M | M | M | M | M | M | M | M | M | M | M | M | M |
| N = 1 | 1000 0000 0000 0000 | M+1 | M | M | M | M | M | M | M | M | M | M | M | M | M | M | M |
| N = 2 | 1000 0000 1000 0000 | M+1 | M | M | M | M | M | M | M | M+1 | M | M | M | M | M | M | M |
| N = 3 | 1000 0100 0010 0000 | M+1 | M | M | M | M | M+1 | M | M | M | M | M+1 | M | M | M | M | M |
| N = 4 | 1000 1000 1000 1000 | M+1 | M | M | M | M+1 | M | M | M | M+1 | M | M | M | M+1 | M | M | M |
| N = 5 | 1001 0010 0100 1000 | M+1 | M | M | M+1 | M | M | M+1 | M | M | M+1 | M | M | M+1 | M | M | M |
| N = 6 | 1001 0010 1001 0010 | M+1 | M | M | M+1 | M | M | M+1 | M | M+1 | M | M | M+1 | M | M | M+1 | M |
| N = 7 | 1010 1010 1010 1000 | M+1 | M | M+1 | M | M+1 | M | M+1 | M | M+1 | M | M+1 | M | M+1 | M | M | M |
| N = 8 | 1010 1010 1010 1010 | M+1 | M | M+1 | M | M+1 | M | M+1 | M | M+1 | M | M+1 | M | M+1 | M | M+1 | M |
| N = 9 | 1010 1010 1010 1011 | M+1 | M | M+1 | M | M+1 | M | M+1 | M | M+1 | M | M+1 | M | M+1 | M | M+1 | M+1 |
| N = 10 | 1010 1011 1010 1011 | M+1 | M | M+1 | M | M+1 | M | M+1 | M+1 | M+1 | M | M+1 | M | M+1 | M | M+1 | M+1 |
| N = 11 | 1010 1011 1011 1011 | M+1 | M | M+1 | M | M+1 | M | M+1 | M+1 | M+1 | M | M+1 | M+1 | M+1 | M | M+1 | M+1 |
| N = 12 | 1011 1011 1011 1011 | M+1 | M | M+1 | M+1 | M+1 | M | M+1 | M+1 | M+1 | M | M+1 | M+1 | M+1 | M | M+1 | M+1 |
| N = 13 | 1011 1011 1011 1111 | M+1 | M | M+1 | M+1 | M+1 | M | M+1 | M+1 | M+1 | M | M+1 | M+1 | M+1 | M+1 | M+1 | M+1 |
| N = 14 | 1011 1111 1011 1111 | M+1 | M | M+1 | M+1 | M+1 | M+1 | M+1 | M+1 | M+1 | M | M+1 | M+1 | M+1 | M+1 | M+1 | M+1 |
| N = 15 | 1011 1111 1111 1111 | M+1 | M | M+1 | M+1 | M+1 | M+1 | M+1 | M+1 | M+1 | M+1 | M+1 | M+1 | M+1 | M+1 | M+1 | M+1 |

FIG-5

FIG-6

$\Theta$

$R = K\Theta$

$\dfrac{\Delta\alpha}{\Delta t} = \dfrac{V}{R}$

$\dfrac{\Delta\beta}{\Delta t}$

$\varepsilon$

EP 0 272 959 B1